(19) Europäisches Patentamt
European Patent Office
Office européen des brevets

(11) EP 0 757 062 B1

(12) **EUROPÄISCHE PATENTSCHRIFT**

(45) Veröffentlichungstag und Bekanntmachung des Hinweises auf die Patenterteilung:
**23.02.2000 Patentblatt 2000/08**

(51) Int Cl.$^7$: **C08F 8/30**, C08G 81/00

(21) Anmeldenummer: **96111813.0**

(22) Anmeldetag: **23.07.1996**

# (54) Als Phasenvermittler geeignete, 2-oxazolinylterminierte Polymere und Oligomere

2-Oxazolinyl terminated polymers and oligomers and use thereof as compatibilizers

Polymères et oligomères à terminaison 2-oxazolinyle et leur utilisation en tant qu'agents de compatibilisation

(84) Benannte Vertragsstaaten:
**AT BE CH DE ES FI FR GB LI LU NL SE**

(30) Priorität: **01.08.1995 DE 19528192**

(43) Veröffentlichungstag der Anmeldung:
**05.02.1997 Patentblatt 1997/06**

(73) Patentinhaber: **BASF Aktiengesellschaft
67063 Ludwigshafen (DE)**

(72) Erfinder:
- **Rösch, Joachim, Dr.
67069 Ludwigshafen (DE)**
- **Müller, Hans-Joachim, Dr.
67269 Grünstadt (DE)**
- **Höhn, Arthur, Dr.
67281 Kirchheim (DE)**
- **Muelhaupt, Rolf, Prof. Dr.
79117 Freiburg (DE)**
- **Woerner, Christof
79235 Vogtsburg (DE)**

(56) Entgegenhaltungen:
**EP-A- 0 410 546** **DE-A- 4 209 283**
**US-A- 3 208 981** **US-A- 4 137 385**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 757 062 B1

## Beschreibung

Die vorliegende Erfindung betrifft Polymere und Oligomere von olefinisch ungesättigten $C_2$- bis $C_{20}$-Kohlenwasserstoffen mit einer 2-Oxazolinylendgruppe der Struktur (I)

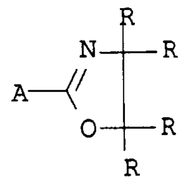

(I)

wobei A ein von den olefinisch ungesättigten $C_2$- bis $C_{20}$-Kohlenwasserstoffen mit einer Molmasse $\overline{M}_n$ im Bereich von 300 bis 15.000 abgeleiteter Polymer- oder Oligomerrest bedeutet und die Reste R gleich oder verschieden sein können und folgende Bedeutung haben:

- Wasserstoff,
- $C_1$- bis $C_{10}$-Alkyl,
- $C_6$- bis $C_{10}$-Aryl
- $C_3$- bis $C_6$-Cycloalkyl.

Außerdem betrifft die Erfindung Kammpolymere (II) und (III), erhältlich durch kationische ringöffnende Homo- oder Copolymerisation der Verbindungen (I) oder durch Reaktion eines Basispolymeren mit reaktiven Gruppen mit den Verbindungen (I).
Weiterhin betrifft die Erfindung thermoplastische Formmassen oder Duromere enthaltend die Verbindungen (I) oder die Kammpolymeren (II) oder (III) oder Mischungen aus (I) bis (III).
Außerdem betrifft die Erfindung ein Verfahren zur Herstellung der Verbindungen (I) und ein Verfahren zur Herstellung von Kammpolymeren (II) und (III) aus den Verbindungen (I).
Weiterhin betrifft die vorliegende Erfindung die Verwendung der Verbindungen (I), (II) oder (III) oder deren Mischungen als Phasenvermittler in Polymermischungen, sowie die Verwendung der thermoplastischen Formmassen oder Duromere, enthaltend die Verbindungen (I), (II) oder (III) oder deren Mischungen zur Herstellung von Folien, Fasern und Formkörpern sowie die daraus erhältlichen Folien, Fasern und Formkörper.
Um gewünschte Eigenschaften von Kunststoffen einzustellen, ist es in der Kunststofftechnik üblich, Reinpolymerisate mit unterschiedlichen physikalischen Eigenschaften zu vermischen. Aufgrund ihrer unterschiedlichen Polarität mischen sich jedoch viele Reinpolymerisate, wie unpolare Polyolefine und polare Polyester, nicht homogen. Um die Mischbarkeit der unterschiedlichen Polymeren zu erleichtern, setzt man den Polymermischungen sogenannte Phasenvermittler zu.
Phasenvermittler sind im allgemeinen Polymere, die zum einen Struktursegmente enthalten, die mit einem der Mischungspartner mischbar sind, als auch Segmente, die mit dem zweiten oder weiteren Mischungspartner mischbar sind.
Derartige Verbindungen sind zum Beispiel die aus EP-A 0 234 114 bekannten Ziegler-Natta-Polyolefine mit einer Carboxyl- oder Hydroxylendgruppe. Derartige funktionelle Endgruppen sind jedoch chemisch nur noch begrenzt modifizierbar und die monofunktionell terminierten Ziegler-Natta-Polymerisate sind als Monomere für die Polymerisation, wie beispielsweise die ringöffnende Polymerisation, nicht geeignet.
EP-A 0 394 854 beschreibt ein Verfahren zur Herstellung von 2-Alkyl- oder 2-Alkenyl-2-oxazolinen aus Pflanzenölen. Derartige Oxazolinderivate sind einerseits, aufgrund des breiten Fettsäurespektrums der Pflanzenöle, in ihrer Zusammensetzung zu heterogen und andererseits reicht die Länge der Fettsäurereste nicht aus, um ein guter Phasenvermittler, z.B. zu Polyolefinen, zu sein bzw. um die Mischbarkeit mit Polyolefinen zu erleichtern.
In US-A 4 137 385 werden wasserhärtbare Polymere beschrieben, die ein Reaktionsprodukt aus einer Verbindung mit 2 bis 20 Oxazolinylresten, einer Polymerkomponente und Wasser umfassen.
EP-A 0 410 546 beschreibt oxazolinylfunktionalisierte Elastomere mit endständigen oder über die Polymerkette verteilten Oxazolinylresten, wobei keine Angaben zu vorteilhaften Molekulargewichten gemacht werden.
Der vorliegenden Erfindung lag daher die Aufgabe zugrunde, den geschilderten Mängeln abzuhelfen und Oligomere oder Polymere mit speziellen Endgruppen zu entwickeln, die einerseits selbst als Phasenvermittler für unterschiedlich polare Polymere verwendet werden können, aber andererseits auch als Monomere oder Reaktanden zur Herstellung von Phasenvermittlern mit Kammpolymerstruktur geeignet sind.
Demgemäß wurden die Polymere und Oligomere von olefinisch ungesättigten $C_2$- bis $C_{20}$-Kohlenwasserstof-

fen mit einer 2-Oxazolinylendgruppe der Struktur (I)

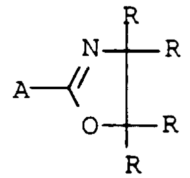

(I)

wobei A ein von den olefinisch ungesättigten $C_2$- bis $C_{20}$-Kohlenwasserstoffen abgeleiteter Polymer- oder Oligomerrest bedeutet und die Reste R gleich oder verschieden sein können und folgende Bedeutung haben:

- Wasserstoff,
- $C_1$- bis $C_{10}$-Alkyl,
- $C_6$- bis $C_{10}$-Aryl
- $C_3$- bis $C_6$-Cycloalkyl

gefunden.

Außerdem wurden Kammpolymere (II), erhältlich durch kationische ringöffnende Homo- oder Copolymerisation von Verbindungen (I) nach Anspruch 1 sowie Kammpolymere (III), erhältlich durch Reaktion von Verbindungen (I) nach Anspruch 1 mit einem Basispolymeren, das reaktive Gruppen enthält, gefunden.

Weiterhin wurden die eingangs definierten thermoplastischen Formmassen und Duromere gefunden.

Des weiteren wurde ein Verfahren zur Herstellung der eingangs definierten Polymeren und Oligomeren (I), ein Verfahren zur Herstellung der eingangs definierten Kammpolymeren (II) durch kationische ringöffnende Polymerisation sowie ein Verfahren zur Herstellung der eingangs definierten Kammpolymeren (III) durch Umsetzung eines Basispolymeren mit reaktiven Gruppen mit den eingangs definierten Polymeren und Oligomeren (I) gefunden.

Schließlich wurde die Verwendung der eingangs definierten Verbindungen (I), (II) oder (III) oder deren Mischungen als Phasenvermittler in Polymermischungen sowie die Verwendung der thermoplastischen Formmassen oder Duromere, enthaltend die Verbindungen (I), (II) oder (III) oder deren Mischungen zur Herstellung von Folien, Fasern und Formkörpern sowie die daraus erhältlichen Folien, Fasern und Formkörper, gefunden.

Die den erfindungsgemäßen Polymeren und Oligomeren (I) zugrunde liegenden olefinisch ungesättigten $C_2$- bis $C_{20}$-Kohlenwasserstoffe können $C_2$- bis $C_{20}$-Monoene oder $C_4$- bis $C_{20}$-Diene sein, hier beispielsweise 1,3-Butadien, sowie vinylaromatische Verbindungen wie Styrol oder $\alpha$-Methylstyrol. Vorzugsweise verwendet man $C_2$- bis $C_{10}$-Alk-1-ene wie Ethen, Propen, 1-Buten, iso-Buten, 1-Penten, 1-Hexen, 1-Hepten, 1-Octen, 1-Nonen oder 1-Decen als Monomere. Ganz besonders bevorzugt sind Propen und iso-Buten.

Die Monomeren werden im allgemeinen mit den literaturbekannten Polymerisationsverfahren bis zu dem gewünschten Oligomerisierungsgrad oder Polymerisationsgrad bzw. der gewünschten Molmasse $\overline{M}_n$ polymerisiert.

Für die Polymerisation der Alk-1-ene mit vinylischer Doppelbindung, beispielsweise Ethen, Propen, 1-Buten, kommt im allgemeinen die Ziegler-Polymerisation oder Phillips-Polymerisation, jedoch vorzugsweise die Polymerisation mit Metallocen-Katalysatoren, wie exemplarisch in R. Mülhaupt in "Ziegler Catalysts", Springer-Verlag, Berlin 1995, S. 35ff., beschrieben, in Frage. Als Metallocenverbindungen werden in der Regel Bis(cyclopentadienyl)zirkondichlorid, Bis(pentamethylcyclopentadienyl)zirkondichlorid, Bis(indenyl)zirkondichlorid, Bis-(n-butylcyclopentadienyl)zirkondichlorid, Bis-(n-octadecylcyclopentadienyl)zirkondichlorid oder Bis-(tetrahydroindenyl)zirkondichlorid verwendet, vorzugsweise jedoch Bis-(n-octadecylcyclopentadienyl)zirkondichlorid, Bis(cyclopentadienyl)zirkondichlorid, Bis-(tetrahydroindenyl)zirkondichlorid und Bis-(pentamethylcyclopentadienyl)zirkondichlorid.

Die erhaltenen Alk-1-en-Oligomere oder Polymere haben eine mittlere Molmasse $\overline{M}_n$ von 300 bis 15.000, vorzugsweise von 300 bis 2.500.

Iso-Buten wird im allgemeinen mittels kationischer Polymerisation, wie in J.P. Kennedy, R.G. Squires, Polymer 6, (1965), 579, beschrieben, zu Polyisobutylen der Molmasse $\overline{M}_n$ von 300 bis 15.000, vorzugsweise von 800 bis 2.500 polymerisiert.

Styrol wird im allgemeinen mittels anionischer Polymerisation mit beispielsweise n-Butyllithium als Initiator, wie in M. Swarc, J. Am. Chem. Soc., 78, 2656 (1956), beschrieben zum Polystyrolanion polymerisiert und die "lebenden" Polymer- oder Oligomer-Ketten, die eine Molmasse $\overline{M}_n$ von 300 bis 15.000, vorzugsweise von 500 bis 2.500 haben, mit Kohlendioxid zur Carbonsäure umgesetzt.

Die mit den unterschiedlichen Polymerisationsverfahren erhältlichen Oligomere oder Polymere aus olefinisch ungesättigten $C_2$- bis $C_{20}$-Kohlenwasserstoffen haben in der Regel eine lineare Struktur, also praktisch keine Seitengruppen, deren Kohlenstoffanzahl größer ist als die Gesamtkohlenstoffanzahl des Monomeren vermindert um zwei

Kohlenstoffatome.

Ihr Polymerisationsgrad ist im allgemeinen größer als 10 und das Zahlenmittel der Molmasse $\overline{M}_n$, gemessen mit der Methode der Gelpermeationschromatographie (GPC) bei 135°C in 1,2,4-Trichlorbenzol (Polyethylen-Standard oder Polypropylen-Standard), liegt im Bereich von 300 bis 15.000. Die Molmassenverteilung $\overline{M}_w/\overline{M}_n$, gemessen mit der Methode der GPC, wie bereits erwähnt, liegt üblicherweise im Bereich von 1 bis 3.

Der Substituent A in (I) beschreibt den Kohlenwasserstoffrest, der sich von den, wie beschrieben erhältlichen, Oligomeren und Polymeren ableitet.

Die Kohlenwasserstoff-Oligomeren oder Polymeren, außer denen des Styrols, enthalten im allgemeinen endständige Doppelbindungen, die je nach Monomeren/Katalysatorkombination bei der Oligomerenherstellung vinylischer Natur oder vinylidenischer Natur sind.

Der Gehalt dieser endständigen Doppelbindungen hängt im allgemeinen von den Reaktionsbedingungen ab. In der Regel enthalten die Oligomeren oder Polymeren des Propens oder des iso-Butens eine endständige Doppelbindung/Kette.

Die Oligomere oder Polymere aus prochiralen Olefinen sind im allgemeinen, je nach Reaktionsbedingung, ataktisch, isotaktisch oder syndiotaktisch. Im allgemeinen liefert die Polymerisation oder Oligomerisation von $C_3$- bis $C_{10}$-Alk-1-enen, insbesondere Propen, mit Bis(cyclopentadienyl)zirkondichlorid-Katalysatorsystemen ataktisches Material.

Die eingangs definierten Monomere können sowohl homopolymerisiert als auch miteinander in beliebigem Verhältnis copolymerisiert werden. In der Regel werden vorzugsweise Alk-1-ene (inclusive Ethen), insbesondere Propen, copolymerisiert.

Im allgemeinen werden die nach den beschriebenen Verfahren erhältlichen, nicht polar-funktionalisierten Polymere und Oligomere von olefinisch ungesättigten $C_2$- bis $C_{20}$-Kohlenwasserstoffen am Kettenende mit einer Estergruppe modifiziert.

Dies geschieht in der Regel durch, dem Fachmann bekannte, Reaktionen an den endständigen Vinyl- oder Vinyliden-Doppelbindungen der Polymeren oder Oligomeren wie zum Beispiel Maleinierung, Addition von SiH- oder thiolfunktionalisierten Carbonsäureestern sowie vorzugsweise Hydroformylierung in Gegenwart von Alkoholen als Lösungsmittel (W. Bertleff, Ullmanns Encyclopedia of Industrial Chemistry 5th Ed., Verlag Chemie Weinheim 1986, Vol. A5, S. 217 ff.).

Wie bereits beschrieben, werden die durch anionische Polymerisation von Styrol oder dessen Derivaten erhältlichen, Oligomer- oder Polymeranionen im allgemeinen mit Kohlendioxid zur Carbonsäure umgesetzt, die dann, mit dem Fachmann bekannten Veresterungsverfahren, in Carbonsäureester übergeführt wird.

Der Aufbau des terminalen 2-Oxazolin-Rings von (I) geschieht in der Regel durch Umsetzung der esterterminierten Oligomere oder Polymere aus olefinisch ungesättigten $C_2$- bis $C_{20}$-Kohlenwasserstoffen mit 2-Amino-1-alkoholen in Gegenwart von Protonensäuren und/oder Lewissäuren, wie analog in EP-A- 0 394 854 beschrieben.

Die Reste R in (I) können gleich oder verschieden sein und bedeuten Wasserstoff, $C_1$- bis $C_{10}$-Alkyl, $C_6$- bis $C_{10}$-Aryl oder $C_3$- bis $C_6$-Cycloalkyl. Vorzugsweise bedeuten R Methyl, Ethyl, Phenyl, Cyclohexyl oder Wasserstoff und insbesondere Wasserstoff.

Die Reste R werden üblicherweise über die 2-Amino-1-alkohole in das Ringgerüst von (I) eingeführt.

Geeignete 2-Amino-1-alkohole sind generell die Ringöffnungsprodukte von Epoxiden mit Ammoniak wie zum Beispiel 2-Aminoethan-1-ol, 2-Amino-propan-1-ol, 2-Amino-butan-1-ol, 2-Amino-l-phenylethan-l-ol. Vorzugsweise verwendet man 2-Aminoethan-1-ol.

Als Lewis-Säure verwendet man in der Regel $C_1$- bis $C_{10}$-Tetraalkoxide oder Tetracarboxylate des Titans, Zirkoniums oder Hafniums, wie zum Beispiel Titan-(IV)-n-butoxyd oder Titantetracetat.

Die Ringschlußreaktion zum 2-Oxazolinderivat kann sowohl in einer Stufe als auch zweistufig durchgeführt werden.

Beim einstufigen Verfahren erhitzt man in der Regel die Komponenten, also 2-Amino-1-alkohol und esterterminierte Oligomere oder Polymere aus olefinisch ungesättigten $C_2$- bis $C_{20}$-Kohlenwasserstoffen, in einem Lösungsmittel, beispielsweise Xylol, auf Temperaturen im Bereich von 130 bis 230°C in Gegenwart einer Lewis-Säure, und destilliert den freiwerdenden Alkohol ab. In einem bevorzugten Verfahren kann auch ohne Lösungsmittel gearbeitet werden.

Beim zweistufigen Verfahren setzt man üblicherweise die Reaktionskomponenten esterterminiertes Oligomer oder Polymer und 2-Amino-1-alkohol zum 2-Hydroxyethylamid um. Vorteilhafte Reaktionsbedingungen sind hierfür Reaktionstemperaturen von 130 bis 200°C und beispielsweise Xylol als Lösungsmittel.

Die Oligomeren oder Polymeren aus $C_2$- bis $C_{20}$- Kohlenwasserstoffen mit einer gegebenenfalls substituierten 2-Hydroxyethylamidendgruppe (R-Substitutionsmuster analog (I)) können dann isoliert werden, oder gleich zu den erfindungsgemäßen Verbindungen (I) cyclisiert werden. Für die zweite Stufe (Cyclisierung) haben sich Reaktionstemperaturen im Bereich von 170 bis 230°C, vorzugsweise keine Lösungsmittel und Katalysatoren auf der Basis von Lewis-Säuren wie z.B. Titantetra-n-butoxid oder Cadmiumacetat als geeignet erwiesen.

Vorzugsweise führt man das zweistufige Verfahren in Gegenwart von Titanalkoxiden als Katalysatoren bei einer Reaktionstemperatur von 170 bis 200°C durch.

Die 2-oxazolinylterminierten Oligomere oder Polymere können vorteilhaft zur Herstellung von Kammpolymeren verwendet werden.

Kammpolymere sind Polymere aus Struktureinheiten B, an die zwei oder mehr Ketten der Struktureinheit C angekoppelt sind (Comprehensive Polymer Science, Vol. 6, S. 403, Pergamon Press (1989).

Für die Herstellung der erfindungsgemäßen Kammpolymeren kann man sich zweier Methoden bedienen:

a) die kationische ringöffnende Polymerisation der Verbindungen (I)

b) die Umsetzung der Verbindungen (I) mit Basis-Polymeren, welche Substituenten enthalten, die mit der 2-Oxazolinyl-Endgruppe von (I) unter Bildung einer ionischen oder vorzugsweise kovalenten Bindung reagieren können ("reaktive Gruppen").

Die kationische ringöffnende Polymerisation (Y. CHUHO et al., "Ring Opening Polymerization", Hanser Verlag 1993, S. 239-262) von (I) liefert nach Schema 1 das Kammpolymere (II), in dem die Substituenten die für (I) definierte Bedeutung haben, El bedeutet Elektrophil, Nu bedeutet Nucleophil.

Schema 1

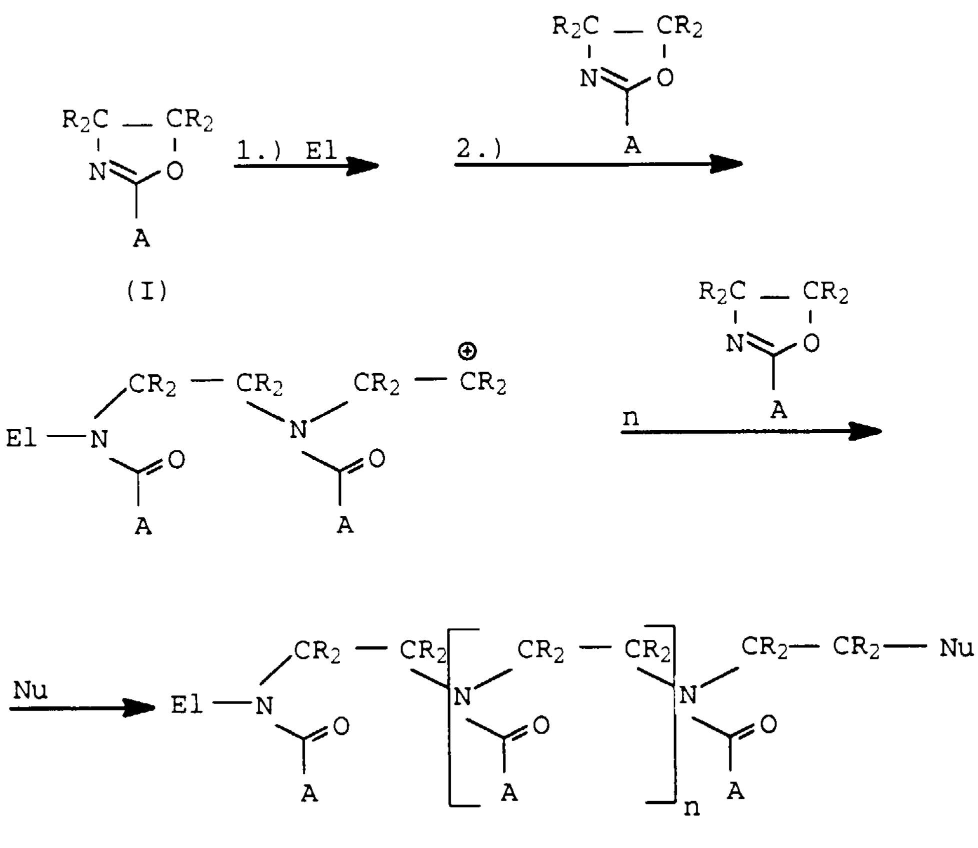


(I)

(II)

Ein geeignetes Verfahren zur kationischen ringöffnenden Polymerisation von (I) ist das Erhitzen der 2-Oxazolin-derivate (I) in einem Lösungsmittel, beispielsweise Xylol, auf Temperaturen im Bereich von 130 bis 270°C, vorzugsweise von 175 bis 240°C in Gegenwart von Elektrophilen als Initiatoren. Geeignete Elektrophile sind Protonensäuren wie zum Beispiel Trifluoressigsäure, Fluorsulfonsäure, Trifluormethansulfonsäure, Perchlorsäure, Alkylierungsmittel, beispielsweise Methyliodid, p-Toluolsulfonsäuremethylester, Dimethylsulfat, Methyl(4-nitrobenzolsulfonat) oder Lewis-Säuren wie Zinntetrachlorid, Bortrifluorid, Bortrifluorid/Alkohol, Aluminiumtrichlorid.

Auch Mischungen der verschiedenen Elektrophile sind geeignet die Polymerisation zu induzieren.
In einem bevorzugten Verfahren kann auch ohne Lösungsmittel in Gegenwart von vierwertigen Titanverbindungen wie Titan-IV-n-butoxid bei 130 bis 270°C gearbeitet werden.
Der Polymerisationsgrad n+2 der Kammpolymere (II), siehe Schema 1, beträgt im allgemeinen 2 bis 100, vorzugsweise 2 bis 50.
Die kationische ringöffnende Polymerisation von (I) kann als Homopolymerisation oder aber als Copolymerisation von (I) mit von (I) unterschiedlichen Co-Monomeren durchgeführt werden. Derartige Co-Monomere können 2-substituierte 2-Oxazoline, vorzugsweise jedoch 2-($C_1$- bis $C_4$-Alkyl)oxazoline, insbesondere 2-Methyl-oxazolin sein. Die entstehenden amphiphilen Copolymeren enthalten in der Regel 1 bis 80 mol-% Comonomer.
Die Kammpolymeren (III) können durch die Reaktion eines Basispolymeren mit reaktiven Gruppen mit den erfindungsgemäßen Verbindungen (I) erhalten werden, siehe beispielhaft Schema 2:

Schema 2

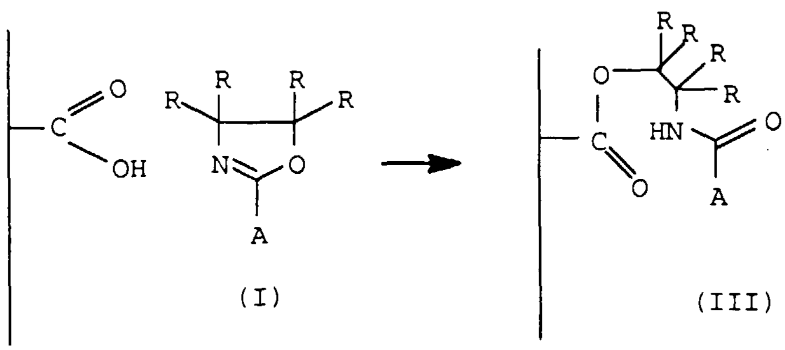

(I) (III)

Geeignete Basispolymere mit reaktiven Gruppen sind solche, Homo- und Copolymere, die -$XH_m$-Gruppen enthalten, wobei

X für Stickstoff, Phosphor, Sauerstoff oder Schwefel steht und
m 1 oder 2

bedeutet.
Vorzugsweise steht X für Sauerstoff. Besonders bevorzugt sind carboxylgruppenhaltige Homo- und Copolymere wie Poly(ethen-co-methacrylsäure), Poly(ethen-co-acrylsäure), Poly(butylacrylat-comethylmethacrylat-co-methacrylsäure), Poly(butylacrylat-co-methylmethacrylat-co-acrylsäure), Poly(styrol-co-methacrylsäure), Poly(styrol-co-acrylsäure), Poly(styrol-co-acrylnitril-co-methacrylsäure), Poly(styrol-co-acrylnitril-co-acrylsäure), Poly(butadien-co-methacrylsäure), Poly(butadien-co-acrylsäure), Poly(acrylnitril-co-butadien-co-methacrylsäure), Poly(acrylnitril-co-butadien-co-acrylsäure), Poly(ethen-co-t-butylacrylat-co-acrylsäure), Poly(ethen-co-n-butylacrylat-co-acrylsäure).
Ferner sind als Basispolymere partiell hydrolysierte Polyester, Polyurethane oder Polyamide geeignet.
Neben den carbonsäurefunktionellen Polymeren eignen sich auch deren partiell neutralisierte Ionomer-Derivate, beispielsweise partielle Natrium- oder Zink-Ionomere aus Poly(ethen-co-acrylsäure) oder Poly(ethen-co-methacrylsäure).
Ein geeignetes Verfahren zur Herstellung der Kammpolymeren (III) ist die Umsetzung der Basispolymeren mit reaktiven Gruppen, vorzugsweise Carboxylgruppen, mit den erfindungsgemäßen Verbindungen (I) bei Temperaturen im Bereich von 180 bis 260°C, vorzugsweise von 190 bis 230°C in Gegenwart von Lösungsmitteln, beispielsweise, Xylol, Dimethylformamid, N-Methylpyrolidon oder vorzugsweise in der Schmelze der Komponenten.
Diese polymeranalogen Reaktionen laufen überraschend schnell und mit sehr hohen Ausbeuten (> 90%) ab.
Nach dem derzeitigen Kenntnisstand geht man davon aus, daß die erfindungsgemäßen Verbindungen (I) von der Carboxylgruppe der Basispolymeren zunächst zum Oxazoliniumsalz (Ia) protoniert werden, bevor sie dann bei höheren Temperaturen, vorzugsweise über 100°C, unter Ringöffnung zum Amid reagieren, Schema 3:

Schema 3

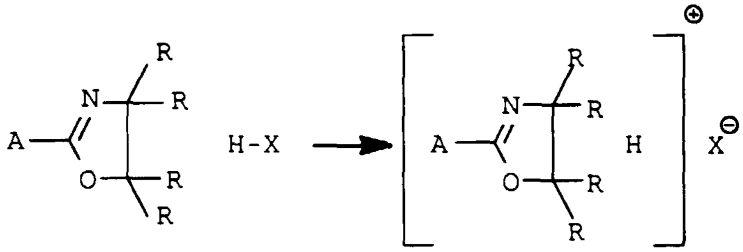


(I) (Ia) (Ia)

Generell geeignete Säuren HX, für diese Reaktion sind neben den bereits erwähnten Basispolymeren, mono- und polyfunktionelle $C_1$- bis $C_{20}$-Carbonsäuren wie beispielsweise Essigsäure, Benzoesäure, Terephthalsäure, Adipinsäure, Milchsäure, Acrylsäure, Methacrylsäure, Stearinsäure sowie ferner Phosphorsäurederivate.
Die Verbindungen (I), (II) oder (III) oder deren Mischungen eignen sich sehr gut als Phasenvermittler für Polymermischungen aus im Reinzustand nicht mischbaren Polymeren.
Den Polymermischungen liegen üblicherweise Thermoplaste oder Duromere zugrunde.
Als Thermoplaste sind generell alle Polymerisate dieser Polymerklasse geeignet. Vorzugsweise kommen Homo- und Copolymerisate von $C_2$- bis $C_{10}$-Alk-1-enen wie beispielsweise PE-LD, PE-HD, PE-LLD, PP oder Styrolpolymerisate sowie Polyester oder Polyamide in Frage.
Ganz besonders bevorzugt werden die Verbindungen (I), (II) oder (III) oder deren Mischungen als Phasenvermittler in Polymermischungen aus Polyolefinen/Polyester, Polypropylen/Polyethylen, Polyisobutylen/Polypropylen, Polyisobutylen/Polyethylen, Polyisobutylen/Polyester, Polyisobutylen/Polyamid eingesetzt.
Die erfindungsgemäßen Verbindungen (I), (II) oder (III) oder deren Mischungen sind in den thermoplastischen Polymermischungen im allgemeinen zu 0,2 bis 20 Gew.-%, bezogen auf die Masse der Thermoplasten, enthalten.
Die Polymermischungen werden in der Regel mit den, in der Kunststofftechnik üblichen, Mischverfahren wie beispielsweise Schmelzeextrusion hergestellt.
Hierzu werden die Thermoplast-Komponenten und ein Phasenvermittler oder mehrere Phasenvermittler aus der Gruppe der Verbindungen (I), (II) und (III) in der Schmelze vermischt.
Enthält eine Komponente der Thermoplastmischung im Reinzustand reaktive Gruppen (im Sinne der vorangegangenen Definition des Basispolymeren von (III)), so wird vorzugsweise der Phasenvermittler (III) in situ während der Mischung der Thermoplastkomponenten beispielsweise im Schmelzextruder, durch Reaktion von Verbindung (I) mit der reaktiven Thermoplastkomponente, erhalten.
Den Polymermischungen zugrunde liegende geeignete Duromere sind Epoxidharze, die Carbonsäuren und/oder Phenole, Phenol-Formaldehyd-Kondensate und Carbonsäureanhydride als Härterkomponente enthalten. Ferner ungesättigte Polyesterharze, Acrylat- oder Methacrylat-Harze.
Die Salze (Ia), siehe Schema 3, eignen sich als Dispergatoren, die beim Erhitzen ihre Dispergierwirkung verlieren können und so das Reemulgieren nach dem Applizieren von Dispersionen verhindern können.

Beispiele

Allgemeines

NMR-Analysen wurden mit einem Bruker AMR-300-Spektrometer durchgeführt.
FTIR-Analysen wurden mit einem Bruker/FS-88-Spektrometer durch geführt.
Elementar-Analysen wurden mit einem Perkin Elmer Elemental Analyzer 240 C durchgeführt.
Thermische Eigenschaften und Phasenübergänge (Glasübergangstemperatur, Tg) wurden mit der Methode der DSC (Perkin Elmer DSC-7 Aufheizraten von 9, 16, 26, 36 $Kmin^{-1}$ und Extrapolation auf 0 $Kmin^{-1}$) bestimmt.
Dynamisch mechanische Analysen wurden mit rechteckigen 50x6x2 mm Prüfkörpern bei 1 Hz, 2-5 $Kmin^{-1}$ Aufheizrate und einer Amplitude von 0,3 % mit einem Rheometrics Solids Analyzen RSA II durchgeführt.
Mittlere Molmassen $\bar{M}_n$, $\bar{M}_w$ und Molmassenverteilungen $\bar{M}_w/\bar{M}_n$ wurden mit der Methode der Gelpermeationschromatographie (GPC) bestimmt (1,2,4-Trichlorbenzol, 135°C, Polyethylen- oder Polypropylenstandard).

Beispiel 1

Herstellung von Oligo-Propen

In einen 1-l Stahlautoklaven wurden 500 g Propen einkondensiert und auf 50°C erwärmt (Druck 22 bar). Man gab 26 ml 1,7 molare toluolische Methylalumoxanlösung zu. Anschließend gab man 50 mg Bis(cyclopentadienyl)zirkondichlorid, gelöst in 4,5 ml 1,7 molarer toluolischer Methylalumoxanlösung zu (Al:Zr = 300:1). Die Oligomerisationsdauer betrug 2 h und nach Entspannen des nichtumgesetzten Restpropens erhielt man 450 g flüssiges Propenoligomer. $\overline{M}_n$ = 640 g/mol, $\overline{M}_w$ = 1600, $\overline{M}_w/\overline{M}_n$ = 2,5.

Beispiel 2

Veresternde Carbonylierung von Oligo-Propen

80 g Oligopropen ($\overline{M}_n$ = 640 g/mol, 0,13 mol), 12,3 g Methanol (0,39 mol), 5,7 g Dicobaltoktacarbonyl (16,7 mmol) und 3,7 g 3-Picolin (40 mmol) wurden in einem 0,3 1 Autoklaven mit 50 bar CO beschickt, auf 160°C erhitzt und mit CO auf einen Druck von 280 bar gebracht. Der Druckabfall während der Reaktion wurde mit CO-Zufuhr ausgeglichen. Nach Abkühlen und Extrahieren des Cobalts mit Essigsäure unter Lufteinleitung destillierte man überschüssiges Methanol ab und isolierte das Produkt. Ausbeute: 84 g Esterterminiertes Oligopropen.
$\overline{M}_n$ = 660, $\overline{M}_w/\overline{M}_n$ = 1,73.

Beispiel 3

Mono-N(2-hydroxyethyl-amid)-terminiertes Oligo-Propen

Eine Mischung von 15,8 g (24 mmol) ataktischem methylester-terminierten Oligo-Propen (aus Beispiel 2) und 2,9 g (48 mmol) 2-Aminoethan-1-ol wurde in Gegenwart von 0,04 g (0,1 Gew.-%) Irganox® 1010 (Ciba Geigy) 24 h lang bei 170°C erhitzt. Während dessen wurde aus dem Gemisch Methanol kontinuierlich abdestilliert und anschließend Reste von 2-Aminoethan-1-ol im Ölpumpen-Vakuum entfernt. Es wurden 16,4 g (98 %) Mono-N(2-hydroxyethyl-amid)terminiertes Oligo-Propen erhalten.

FTIR (film): 1600 $cm^{-1}$ (C=O), 1559 $cm^{-1}$ (NH), $^1$H-NMR (300 MHz, $CDCl_3$): δ = 6.18 (s,NH,1H); 4.98-4.68 (m,CH=); 3.72 (t,$CH_2O$, 2H); 3.44 (q, $CH_2N$, 2H); 2.52-0.68 (m, CH, $CH_2$, 200H); $^{13}$C-NMR (75 MHz, $CDCl_3$): δ = 174.9 (CONH); 134.5-131.1 (C=C); 62.4 ($CH_2O$); 47.6-43.3 ($CH_2CH$); 42.4 ($CH_2N$); 41.6-38.5 ($CH_3CH_2CH_2$); 29.8 ($CH_3CH_2CH_2CH_2CH$); 28.0-25.0 (CH); 24.2-18.0; 15.9-14.5 ppm ($CH_3$), $\overline{M}_n$ = 800 g/mol, $\overline{M}_w/\overline{M}_n$ = 1,70.

Beispiel 4

Mono-(1,3-oxazolin-2-yl)terminiertes Oligo-Propen (PP-OXA)

Eine Mischung aus 40 g Mono-N-(2-hydroxyethyl-amid)terminiertem Oligo-Propen (hergestellt analog Beispiel 3) und 0,16 g (0,48 mmol) Titan(IV)n-butoxyd wurden 24 h lang im Ölpumpenvakuum bei 180°C erhitzt und das Reaktionsprodukt über deaktiviertes Silicagel (100 g Silicagel + 40 g Wasser) filtriert.
Ausbeute: 14,2 g.

(C3H4NO) berechnet (gefunden), %C: 82.36 (82.09), %H: 13.54 (13.66), %N 2.00 (2.15); FTIR (film); 2965-2822 $cm^{-1}$ (CH), 1668 $cm^{-1}$ (C=N), 1460 $cm^{-1}$, 1379 $cm^{-1}$, 1H-NMR (300 MHz, $CDCl_3$); δ = 4.14 (t, $CH_2O$, 2H); 3.75 (t, $CH_2N$, 2H); 2.29-1.81 (m, $CHCH_2CN$, 3H); 1.50 (m, CH, 13H); 1.32-0.62 ppm (m, $CH_2$, $CH_3$, 76H); $^{13}$C-NMR (75 MHz, $CDCl_3$); 168.0 (C=N), 67.0 ($CH_2O$); 54.3 ($CH_2N$); 47.6-43.4 ($CH_2CH$); 41.7-38.3 ($CH_3CH_2CH_2$); 36.5-34.5 ($CH_3CH_2CH_2CH$); 28.5-26.6 (CH); 22.1-18.8 ($CH_3$); 14.2 $CH_3CH_2CH_2$), Tg = (-)54.3°C.

Beispiel 5

Poly[N-Oligo-Propen-1-carbonyl-ethylenimin] (PP-PEI Kammpolymer) durch kationisch ringöffnende Polymerisation

Eine Mischung aus 1,0 g (1,43 mmol) PP-OXA (Beispiel 4) und 6,3 mg (0,029 mmol) Methyl-(4-Nitrobenzolsulfonat) wurden 10 Minuten bei 200°C erhitzt, anschließend in Chloroform gelöst, mit verdünnter Natriumhydrogencarbonatlösung extrahiert, getrocknet und das Lösungsmittel im Ölpumpenvakuum verdampft, 0,96 g (96 %) berechnet, (gefunden): %C 82.36 (82.48), %H 13.54 (13.29), %N 2.00 (2.05); FTIR (film): 2967-2820 $cm^{-1}$ (NH), 1650 $cm^{-1}$ (C=O), 1460 $cm^{-1}$, 1379 $cm^{-1}$, $^1$H-NMR (300 MHz, $CDCl_3$): δ = 3.38 (s, $CH_2N$, 4H); 2.29-1.90 (m, $CHCH_2CO$, 3H); 1.50 (s,

CH, 13H); 1.31-0.62 ppm (m, $CH_2$, $CH_3$, 76H); $^{13}C$-NMR (75 MHz, $CDCl_3$); δ = 174.5-172.0 (CO); 47.4-43.2 ($CH_2CH$); 41.5-38.4 ($CH_3CH_2CH_2$, $CH_2N$); 29.6 ($CH_3CH_2CH_2CH$); 27.2 (CH); 22.0-18.6 ($CH_3$); 14.4 ppm ($CH_3CH_2CH_2$). $\overline{M}_n$ = 22100 g/mol und $\overline{M}_w/\overline{M}_n$ = 2,2, Tg = (-)27.8°.

Beispiel 6

Kammpolymere durch Reaktion von Poly(ethen-co-methacrylsäure) mit PP-OXA

Eine Mischung von 2,0 g Poly(ethen-co-methacrylsäure) (Methacrylsäuregehalt 3 Mol-%) 1,41 g (2,02 mmol) PP-OXA (Beispiel 4) und 3,4 mg (0,1 Gew.-%) Irganox® 1010 wurden 15 Minuten lang bei 220°C erhitzt. Das Polymere wurde in Chloroform gelöst, mit Diethylether ausgefällt und im Ölpumpenvakuum getrocknet: 3,3 g (96 %) weißes Polymer.

Elementaranalyse von $(C_2H_4)_{32}[C_7H_{10}NO_3(C_3H_6)_{15}]$ berechnet (gefunden): %C 2849 $cm^{-1}$ (CH), 1730 $cm^{-1}$ (C=O), 1645 $cm^{-1}$ (NHC=O), 1540 $cm^{-1}$(NH), 1463 $cm^{-1}$, 1379 $cm^{-1}$; $^{1}H$-NMR (300 MHz, $CDCl_3$): δ = 5.62 (s, NH, 1H); 4.09 (s, $CH_2O$, 2H); 3.44 (s, $CH_2N$, 2H); 2.09 (s, $CHCH_2CONH$, 3H), 1.70-0.55 ppm (m, CH, $CH_2$, $CH_3$, 220 H), Tg = (-)20.9°C, $T_m$ = 95.1°C, ΔH = -43.0 J/g (DSC).

## Patentansprüche

1. Polymere und Oligomere von olefinisch ungesättigten $C_2$- bis $C_{20}$-Kohlenwasserstoffen mit einer 2-Oxazolinylendgruppe der Struktur (I)

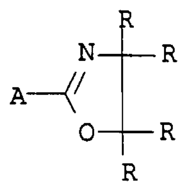

(I)

wobei A ein von den olefinisch ungesättigten $C_2$- bis $C_{20}$-Kohlenwasserstoffen mit einer Molmasse $\overline{M}_n$ im Bereich von 300 bis 15.000 abgeleiteter Polymer- oder Oligomerrest bedeutet und die Reste R gleich oder verschieden sein können und folgende Bedeutung haben:

- Wasserstoff,
- $C_1$- bis $C_{10}$-Alkyl,
- $C_6$- bis $C_{10}$-Aryl,
- $C_3$- bis $C_6$-Cycloalkyl.

2. Kammpolymere (II) erhältlich durch kationische ringöffnende Homo- oder Co-Polymerisation von Verbindungen (I) nach Anspruch 1.

3. Kammpolymere (III) erhältlich durch Reaktion von Verbindungen (I) nach Anspruch 1 mit einem Basispolymeren, das reaktive Gruppen enthält.

4. Thermoplastische Formmassen oder Duromere, enthaltend die Verbindungen (I) nach Anspruch 1, Kammpolymere (II) nach Anspruch 2 oder Kammpolymere (III) nach Anspruch 3 oder Mischungen aus (I) bis (III).

5. Verfahren zur Herstellung von Polymeren und Oligomeren der Struktur (I) gemäß Anspruch 1 durch Oligomerisation oder Polymerisation der olefinisch ungesättigten $C_2$- bis $C_{20}$-Kohlenwasserstoffe, Modifizierung der Oligomer- oder Polymerketten mit einer endständigen Estergruppe und anschließende Lewissäure-katalysierte Ringschlußreaktion mit 2-Amino-1-alkoholen.

6. Verfahren zur Herstellung von Kammpolymeren (II) gemäß den Verfahrensbedingungen des Anspruchs 2.

7. Verfahren zur Herstellung von Kammpolymeren (III) gemäß den Verfahrensbedingungen des Anspruchs 3.

**8.** Verwendung der Polymeren und Oligomeren (I) gemäß Anspruch 1, der Kammpolymeren (II) gemäß Anspruch 2 oder der Kammpolymeren (III) gemäß Anspruch 3 oder Mischungen aus (I) bis (III) als Phasenvermittler in Polymermischungen.

**9.** Folien, Fasern und Formkörper erhältlich aus den thermoplastischen Formmassen oder den Duromeren nach Anspruch 4.

**10.** Verwendung der thermoplastischen Formmassen oder Duromeren gemäß Anspruch 4 zur Herstellung von Folien, Fasern und Formkörpern.

**Claims**

**1.** Polymers and oligomers of olefinically unsaturated $C_2$-$C_{20}$-hydrocarbons having a 2-oxazolinyl end group of the structure (I)

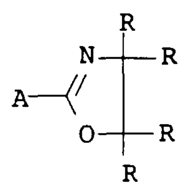

(I)

where A is a polymer or oligomer radical derived from the olefinically unsaturated $C_2$-$C_{20}$-hydrocarbons having a molar mass $\overline{M}_n$ in the range from 300 to 15,000 and the radicals R can be identical or different and have the following meanings:

- hydrogen,
- $C_1$-$C_{10}$-alkyl,
- $C_6$-$C_{10}$-aryl,
- $C_3$-$C_6$-cycloalkyl.

**2.** Comb polymers (II) obtainable by cationic ring-opening homo- or copolymerization of compounds (I) as claimed in claim 1.

**3.** Comb polymers (III) obtainable by reaction of compounds (I) as claimed in claim 1 with a base polymer containing reactive groups.

**4.** Thermoplastic molding materials or thermosets comprising compounds (I) as claimed in claim 1, comb polymers (II) as claimed in claim 2 or comb polymers (III) as claimed in claim 3 or mixtures of (I) to (III).

**5.** A process for preparing polymers and oligomers of the structure (I) as set forth in claim 1 by oligomerization or polymerization of the olefinically unsaturated $C_2$-$C_{20}$-hydrocarbons, modification of the oligomer or polymer chains with a terminal ester group, and subsequent Lewis acid catalyzed ring closure reaction with 2-amino-1-alcohols.

**6.** A process for preparing comb polymers (II) by the process conditions of claim 2.

**7.** A process for preparing comb polymers (III) by the process conditions of claim 3.

**8.** The use of the polymers and oligomers (I) of claim 1, of the comb polymers (II) of claim 2 or of the comb polymers (III) of claim 3 or mixtures of (I) to (III) as compatibilizers in polymer blends.

**9.** Films, fibers and molded articles obtainable from the thermoplastic molding materials or thermosets of claim 4.

**10.** The use of the thermoplastic molding materials or thermosets of claim 4 for producing films, fibers and molded articles.

## Revendications

**1.** Polymères et oligomères d'hydrocarbures à insaturations oléfiniques en $C_2$ à $C_{20}$ ayant un groupe terminal 2-oxazolinyle de structure (I)

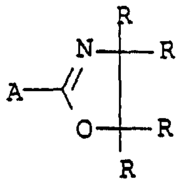

(I)

tandis que A représente un reste polymère ou oligomère dérivé des hydrocarbures à insaturations oléfiniques en $C_2$ à $C_{20}$ ayant une masse molaire $\overline{M}_n$ dans l'intervalle de 300 à 15.000 et que les restes R peuvent être identiques ou différents et ont la signification suivante:

- hydrogène,
- alkyle en $C_1$ à $C_{10}$,
- aryle en $C_6$ à $C_{10}$,
- cycloalkyle en $C_3$ à $C_6$.

**2.** Polymères dentelés (II) pouvant être obtenus par homo- ou co-polymérisation avec ouverture de cycle cationique de composés (I) selon la revendication 1.

**3.** Polymères dentelés (III) pouvant être obtenus par réaction de composés (I) selon la revendication 1 avec un polymère de base qui contient des groupes réactifs.

**4.** Matières à mouler thermoplastiques ou duromères, contenant les composés (I) selon la revendication 1, polymères dentelés (II) selon la revendication 2 ou polymères dentelés (III) selon la revendication 3 ou mélanges de (I) à (III).

**5.** Procédé pour la préparation de polymères et d'oligomères de structure (I) selon la revendication 1 par oligomérisation ou polymérisation des hydrocarbures à insaturations oléfiniques en $C_2$ à $C_{20}$, modification des chaînes oligomères ou polymères avec un groupe ester terminal et ensuite réaction de fermeture de cycle catalysée par un acide de Lewis avec des 2-amino-1-alcools.

**6.** Procédé pour la préparation de polymères dentelés (II) selon les conditions opératoires de la revendication 2.

**7.** Procédé pour la préparation de polymères dentelés (III) selon les conditions opératoires de la revendication 3.

**8.** Utilisation des polymères et des oligomères (I) selon la revendication 1, des polymères dentelés (II) selon la revendication 2 ou des polymères dentelés (III) selon la revendication 3 ou de mélanges de (I) à (III) comme agents intermédiaires de phases dans des mélanges de polymères.

**9.** Feuilles, fibres et produits moulés pouvant être obtenus à partir des matières à mouler thermoplastiques ou des duromères selon la revendication 4.

**10.** Utilisation des matières à mouler thermoplastiques ou des duromères selon la revendication 4 pour la préparation de feuilles, de fibres et de produits moulés.